(19) Europäisches Patentamt
European Patent Office
Office européen des brevets

(11) EP 4 127 053 B1

(12) **EUROPEAN PATENT SPECIFICATION**

(45) Date of publication and mention of the grant of the patent:
**12.06.2024 Bulletin 2024/24**

(21) Application number: **21712872.7**

(22) Date of filing: **23.03.2021**

(51) International Patent Classification (IPC):
***C08L 23/02*** *(2006.01)*

(52) Cooperative Patent Classification (CPC):
(C-Sets available)
**C08L 23/02;** C08L 2023/44; C08L 2207/20 (Cont.)

(86) International application number:
**PCT/EP2021/057422**

(87) International publication number:
**WO 2021/197926 (07.10.2021 Gazette 2021/40)**

(54) **RECYCLED RESIN COMPOSITION**

REZYKLIERTE HARZZUSAMMENSETZUNG

COMPOSITION DE RÉSINE RECYCLÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2020 EP 20167996**

(43) Date of publication of application:
**08.02.2023 Bulletin 2023/06**

(73) Proprietors:
- **Unilever IP Holdings B.V.**
  **3013 AL Rotterdam (NL)**
  Designated Contracting States:
  **AL AT BE BG CH CZ DK EE ES FI FR GR HR HU IS LI LT LU LV MC MK NL NO PL PT RO SE SI SK SM**
- **Unilever Global IP Limited**
  **Wirral, Merseyside CH62 4ZD (GB)**
  Designated Contracting States:
  **CY DE GB IE IT MT RS TR**

(72) Inventors:
- **DAS, Sandip**
  **Mumbai 400099 Andheri (IN)**
- **GADGEEL, Arjit Ajay**
  **Mumbai 400019 Maharashtra (IN)**
- **KURUGANTI, Thejaswi Sesha**
  **Mumbai 400099 Andheri (IN)**
- **MHASKE, Shashank Tejrao**
  **Mumbai 400019 Maharashtra (IN)**

(74) Representative: **Newbould, Frazer Anthony**
**Unilever Patent Group**
**Bronland 14**
**6708 WH Wageningen (NL)**

(56) References cited:
**EP-A1- 0 964 022 WO-A1-2007/078697**

EP 4 127 053 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

(Cont. next page)

(52) Cooperative Patent Classification (CPC): (Cont.)

C-Sets
**C08L 23/02, C08L 23/0869**

## Description

### Field of the Invention

This invention relates to a resin composition having recycled polyolefin. It also relates to films and package comprising the resin composition.

### Background of the Invention

Synthetic plastics are used in a wide variety of applications, such as packaging and consumer goods. Synthetic plastics are in high demand in these applications due to their relatively low production costs and good balance of material properties.

To meet the increasing demand, millions of tons of synthetic plastics are produced globally. Majority of such synthetic plastics are produced from increasingly scarce fossil sources, such as petroleum and natural gas. The production of plastic from fossil sources contributes to raising the levels of greenhouse gases.

The ubiquitous use of synthetic plastics has consequently resulted in millions of tons of plastic waste being generated every year. Most of the used plastics end in landfills, other as litter and still others end in water bodies.

There is environmental pressure on industry to recycle waste polymers, particularly those used in packaging applications. Plastics recycling has emerged as a solution to mitigate the issues associated with the wide-spread usage of plastics. The single or mixed streams of plastic waste are sorted, washed, and reprocessed into pellets that are suitable for re-use in plastics processing.

Polyethylenes (PE), in the form of high-density polyethylene (HDPE) moulding grades, and low-density polyethylene (LDPE) or linear low-density polyethylene (LLDPE) film grades, currently form more than half of the polymer recyclate market. They form the major polymeric part of post-consumer waste streams, along with significant amounts of polypropylene (PP), polystyrene (PS), polyvinyl chloride (PVC) and polyethylene terephthalate (PET), and small amounts of other polymers such as polyamides, polycarbonates and barrier polymers. Also, within post-consumer recycled or PCR plastic as it is more generally known, there is a mix of various types of polyethylenes these includes HDPE, LDPE, LLDPE etc., and with mix of different molecular weight polymer e.g. mixes of low to high MW (molecular weights).

Despite undergoing sorting processes, the PE recovered from post-consumer waste inevitably contains significant amounts of other polymeric contaminants. Such as PE contamination in recycled PP and vice versa. Commercial recyclates from post-consumer waste material have been found generally to contain mixtures of PP and PE, the minor component reaching up to < 50 wt percent. Such recycled PP/PE-blends normally suffer from deteriorated mechanical and optical properties, have poor performance in odour and taste and they generally suffer from poor compatibility between the main polymer phases, resulting in both limited impact strength and heat deflection resistance.

The mechanical properties of recycled PE blends can be significantly impaired, as the degradation undergone by PE during their processing and subsequent lifetime worsens polymer characteristics of the polymers, and recycling operations therefore give rise to secondary materials with poor properties. This holds for all recycled polymers, both homogeneous and heterogeneous, but in the latter case which contain a significant amount of polymeric contamination the problem is more pronounced.

It is observed that processing post-consumer recycled plastic (PCR) by mechanical or hybrid recycling, subjects the polymer to heat stress which leaves the recycled plastic with inferior properties. Films prepared from such recycled plastic undergo gel formation during processing. These gels lead to inferior properties as the film puncture and causes leakage. A further drawback of using recycled resin is that the physical characteristics of the composite may lack in comparison to virgin material. For example, characteristics such as modulus of rupture, modulus of elasticity, peak load and other mechanical characteristics may be adversely impacted by the use of recycled material in many common applications.

Also, the reprocessed pellets often remain highly contaminated with unwanted waste impurities, such as spoiled food residue and residual perfume components. In addition, majority of the post-consumer recycled plastic pellets, are darkly coloured due to the mixture of dyes and pigments commonly used to colour plastic articles.

Accordingly, there is a need to be able to use recycled material and still maintain the physical characteristics same or similar to virgin materials. Thus, a need for high quality, "virgin-like" recycled resin is desired.

Since thermal degradation and applied shear stresses during recycling reduces the properties of polymers, the addition of suitable reinforcements material as an approach to improve the properties has been tried in the past.

Several attempts in the past, have been made to improve the mechanical and physical properties of the post-consumer recycled plastics.

One such attempt was made in US 3862265A (Steinkamp et al., 1975) which discloses polyolefin with improved rheology, modified molecular weight and flow properties, the document discloses grafted polymers with relatively narrow

molecular weight distributions.

EP0964022 A1 (Bridgestone Corporation, 1999) discloses a polymer blend of a maleated polypropylene and an amine terminated polybutadiene where the amine functionalization links polybutadiene and maleated propylene.

WO2007/078697 A1 (Dow Global Technologies Inc) discloses a polymer with vinyl group at a terminal end of the polymer where the terminal end may be further functionalized by grafting.

The prior art document discusses improving the properties of virgin non-use polyolefins. Thus, the problem of recovering the mechanical properties of already processed used and recycled polymeric material, in particular used polyolefins or comingled polyolefins remains to be addressed.

It is thus an object of the present invention to provide a recycled resin composition with a recycled polyolefin having improved functional property, similar to the properties of a virgin polyolefin.

It is yet another object of the present invention to provide an article having increased inclusion levels of the recycled resin composition according to the present invention without compromising on the processability and functional parameters.

Therefore, it is an objective of the present invention to obtain recycled resin composition showing high stiffness as well as high impact strength and heat deflection temperature, while at the same time showing good flowability and processability.

A further objective of the present invention is to improve both the mechanical properties and the processability of recycled resin composition, in order to make them suitable to be used in different applications.

## Summary of the Invention

The present inventors have found that the mechanical, and in particular the tensile properties of a recycled polyolefin are remarkably improved in the recycled resin composition of the present invention when a terminal end of a unit of recycled polyolefin is linked to a functional polymer by a terminal bonding and the recycled resin composition has a weight average molecular weight from 10,000 Kg/mol to 50,000 Kg/mol.

According to a first aspect, the present invention is directed to a method of preparing a recycled resin composition, comprising the steps of:

i) mixing recycled polyolefin and functional polymer selected from acid-grafted polyolefin, anhydride-grafted polyolefin or combinations thereof to form a mixture;
ii) heating the mixture to a temperature ranging from 145°C to 200°C;
iii) applying shear pressure on the heated mixture to link the terminal end of a unit of recycled polyolefin and the functional polymer to form the recycled resin composition; and,
iv) obtaining the recycled resin composition comprising 10 wt.% to 25 wt.% functional polymer and from 5 wt.% to 90 wt.% recycled polyolefin,

wherein the recycled polyolefin unit has an unsaturation on at least one terminal end and the terminal end of the recycled polyolefin unit reacts with and is linked with a carboxyl group or anhydride group of the functional polymer and wherein the recycled resin composition has a weight average molecular weight ranging from 10,000 Kg/mol to 50,000 Kg/mol.

According to a second aspect, the present invention is directed to a recycled resin composition obtainable according to the first aspect.

According to a third aspect, the present invention is directed to an article comprising the recycled resin composition according to the first aspect or according to the second aspect. Preferably the article is a film or a moulded article.

As used herein, "recycled" polyolefin includes post-consumer recycled (PCR) polyolefin, post-industrial recycled (PIR) polyolefin or a mixture thereof. These are preferably comingled polyolefin including polyethylene or polypropylene. In particular, the polyethylene fraction can comprise one or more material selected from high density polyethylene (HDPE), linear low-density polyethylene (LLDPE), low density polyethylene (LDPE) or mixtures thereof.

As used herein, the term "post-consumer recycled" (PCR) refers to material (e.g., a polymer or polymers) that has reached the intended end user or consumer, is no longer being used for its intended purpose, and which has been collected or reclaimed after it is discarded by the end user or consumer. Thus, for example, it is understood that the term refers to material that would have otherwise been disposed of as waste but has instead been collected and recovered (reclaimed) as a material input, in lieu of new virgin material, for a recycling or manufacturing process. The term is inclusive of such collected or reclaimed materials which have been further treated or processed to facilitate re-use of the material. Thus, for example, the term is inclusive of material that has been reprocessed from collected or reclaimed material by means of a manufacturing process and made into a product or into a component for incorporation into a product. The term recycled includes polyolefin that has been used and thereafter entered an established recycling stream.

As used herein, the term "post-industrial recycled" (PIR) refers to material (e.g., a polymer or polymers) that has never reached the end user and has been collected or reclaimed from a waste stream produced in a manufacturing

process. The term "post-industrial recycled" does not include materials that are generated in a manufacturing process and then are reused as a substitute for a raw material in the same manufacturing process, such as regrind polymer that is collected from the waste stream of a manufacturing process (e.g., a thermoforming process), ground to reduce its size, and then reused as a substituted for virgin polymer in the same manufacturing process (e.g., the same thermoforming process). The term is inclusive of such collected or reclaimed materials which have been further treated or processed to facilitate re-use of the material in another manufacturing process.

The term "polymer" as used in the present application denotes a material having a weight average molecular weight (Mw) of at least 5,000.

The term "virgin polymer" as used herein denotes a polymer that has not been used by a consumer/end user and then recycled.

The term "acid-grafted polyolefin" as used herein denotes a polyolefin grafted with an acid component or derivatives thereof.

The term "anhydride-grafted polyolefin" as used herein denotes both a polyolefin grafted with an anhydride component or derivatives thereof.

## Detailed Description of the invention

According to the first aspect of the present invention disclosed is a method of preparing a recycled resin composition.

## Method of preparing the recycled resin composition

According to a second aspect disclosed is a method of preparing a recycled resin composition according to the first aspect, comprising the steps of:

i) mixing recycled polyolefin and functional polymer selected from acid-grafted polyolefin, anhydride-grafted polyolefin or combinations thereof;
ii) heating the mixture to a temperature ranging from 145°C to 200°C;
iii) applying shear pressure on the heated mixture to link the terminal end of a unit of recycled polyolefin and the functional polymer to form the recycled resin composition; and,
iv) obtaining the recycled resin composition comprising 10 wt.% to 25 wt.% functional polymer and from 5 wt.% to 90 wt.% recycled polyolefin;

wherein the recycled polyolefin unit has an unsaturation on at least one terminal end and the terminal end of the recycled polyolefin unit reacts with and is linked with a carboxyl group or anhydride group of the functional polymer and wherein the recycled resin composition has a weight average molecular weight ranging from 10,000 Kg/mol to 50,000 Kg/mol.

During the process of forming the recycled resin composition the functional group attacks the unsaturation present on the terminal end of the polyolefin unit and preferably follows the following reaction:

*Step 1 : Radical formation of acrylic acid*

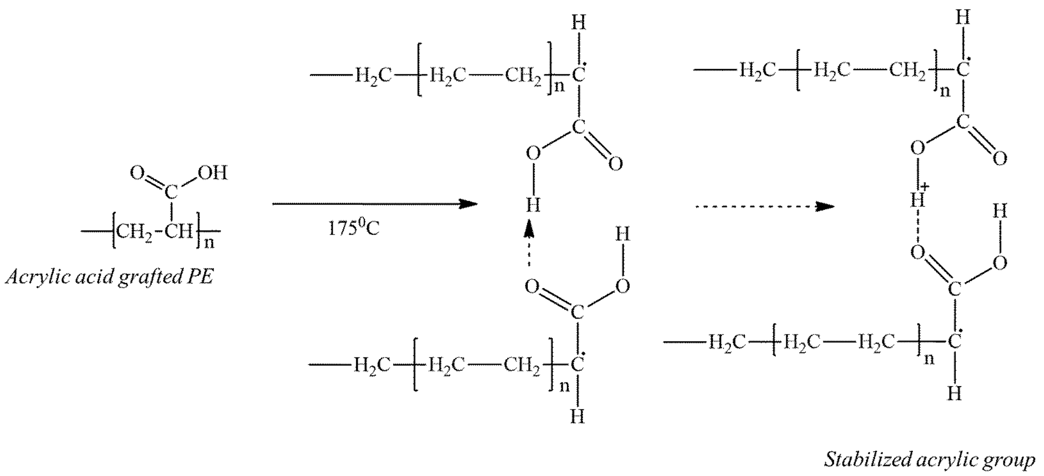


*Step 2 : Radical propagation*

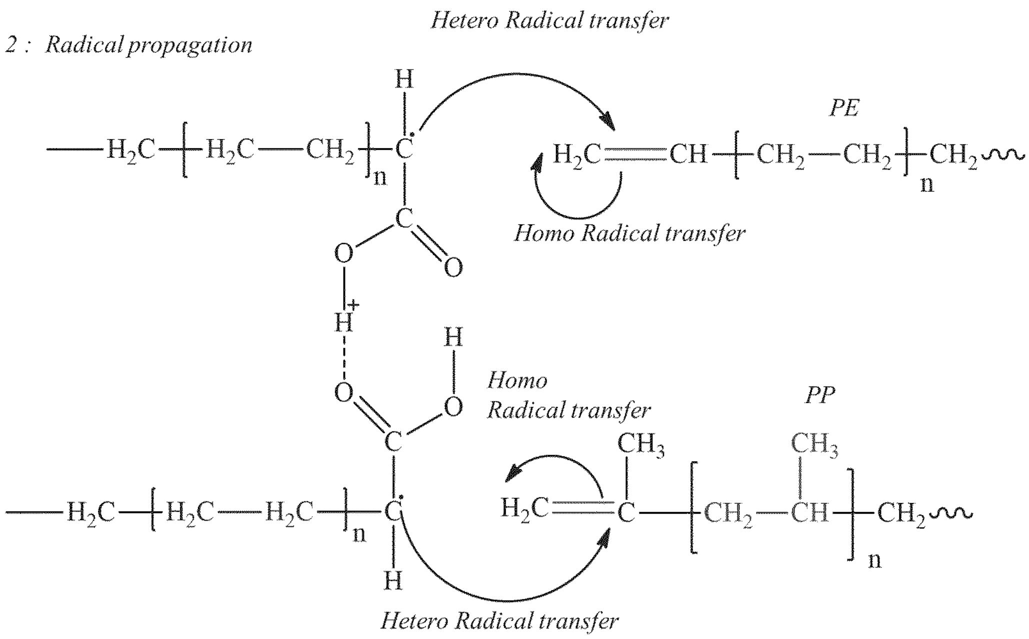


*Step 3: Coupling reaction (PCR = post-consumer recycled polyolefin)*

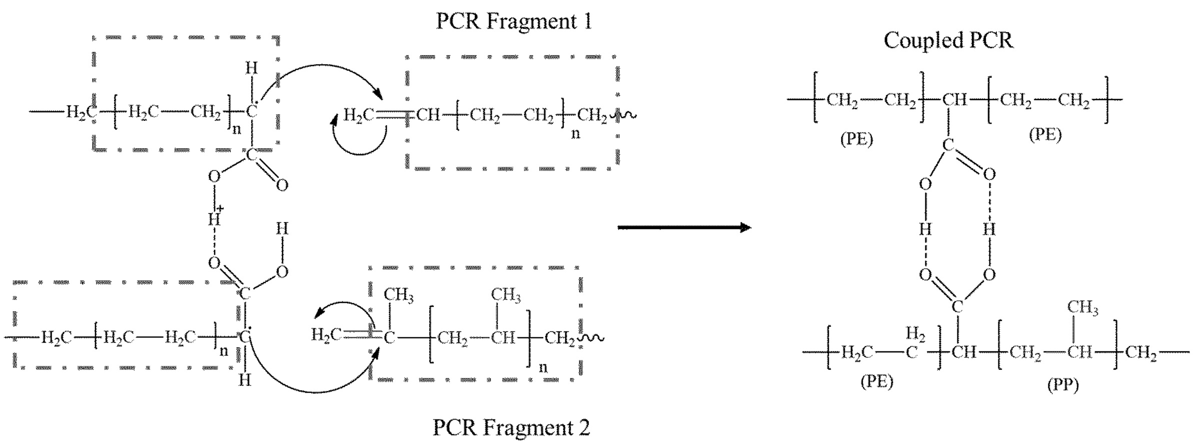

In summary the reaction may be described as follows:

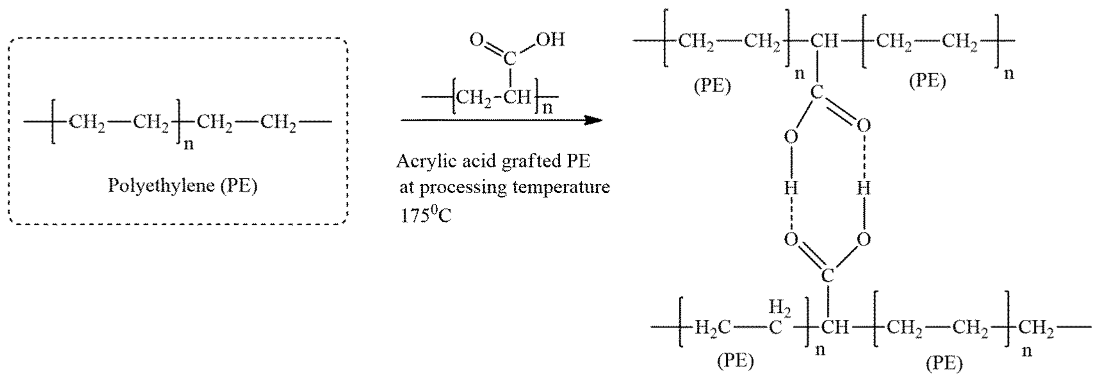


Preferably the method of preparing the recycled resin composition includes a recycled polyolefin having a weight average molecular weight ranging from 5000 Kg/mol to 40,000 Kg/mol.

Preferably the method according to the first aspect provides a recycled resin composition having:

i) 5 wt.% to 90 wt.% recycled polyolefin;
ii) 10 wt.% to 25 wt.% functional polymer selected from anhydride-grafted polyolefin, acid-grafted polyolefin or combinations thereof;

wherein the recycled polyolefin unit has an unsaturation on at least one terminal end and the terminal end of the recycled polyolefin unit reacts with and is linked with a carboxyl group or anhydride group of the functional polymer and wherein the recycled resin composition has a weight average molecular weight from 10,000 Kg/mol to 50,000 Kg/mol.

Preferably in the method according to the first aspect, the recycled polyolefin unit has unsaturation present at both terminal ends.

Preferably in the method according to the first aspect of the present invention at least 60 wt.% of the recycled polyolefin unit comprises one unsaturation present at the terminal end.

Preferably in the method according to the first aspect of the present invention one unit of the functional polymer is linked to the terminal end of two units of recycled polyolefin.

Preferably in the method according to the first aspect of the present invention the functional polymer has a pendant carboxyl group capable of forming chemical linkage with a terminal end unsaturation of the recycled polyolefin via the terminal hydroxyl groups of the functional polymer, preferably the chemical linkage is a covalent bond.

Preferably in the method according to the first aspect of the present invention at least 60%, more preferably at least 80 wt.% of the recycled polyolefin is linked with the functional polymer in the recycled resin composition.

Preferably in the method according to the first aspect of the present invention the recycled polyolefin is a comingled polyolefin comprising at least 80 wt. % of LLDPE, LDPE and HDPE.

Preferably in the method according to the first aspect of the present invention the functional polymer is an acrylic acid graft polyethylene, maleic anhydride grafted polyethylene or combinations thereof.

Preferably in the method according to the first aspect of the present invention the functional polymer is an acrylic acid grafted LDPE, acrylic acid grafted LLDPE, acrylic acid grafted HPDE or combinations thereof.

Preferably in the method according to the first aspect of the present invention the functional polymer has from 3 wt.% to 8 wt.% of the acid or anhydride functional group by weight of the functional polymer.

Preferably in the method according to the first aspect of the present invention the polymer portion of the functional polymer has a weight average molecular weight from 10,000 to 30,000 Kg/mol.

## Recycled resin composition

According to the second aspect of the present invention disclosed is a recycled resin composition which includes recycled polyolefin and a functional polymer obtainable according to the first aspect.

### Recycled polyolefin

According to a second aspect of the present invention disclosed recycled resin composition includes a recycled polyolefin.

The recycled polyolefin can be any suitable polyolefin or combination of polyolefins. Typically, the recycled

polyolefin is selected from the group consisting of polypropylene, polyethylene and mixtures thereof. Preferably, the recycled polyolefin is polyethylene, preferably recycled polyethylene includes single polyethylene type or comingled polyethylene selected from LDPE, HDPE, LLDPE or mixtures thereof.

Preferably the recycled polyethylene content in the recycled polyolefin is at least 50 wt. %, still preferably at least 60 wt. % further preferably at least 70 wt. %, still further preferably at least 75 wt. % and most preferably at least 80 wt. % of the recycled polyolefin.

Preferably the recycled polyolefin may be a post-consumer recycled polyolefin such as the post-consumer recycled polyethylene (PCR-PE) or the post-industrial recycled polyolefin such as post-industrial recycled polyethylene (PIR-PE). Preferably the recycled polyolefin is a mechanically recycled material.

Preferably the weight average molecular weight of the recycled polyolefin is from 5000 Kg/mol to 40,000 Kg/mol. Preferably the weight average molecular weight of the recycled polyolefin is at least 8,000 Kg/mol, still preferably at least 9,000 Kg/mol, but preferably not more than 30,000 Kg/mol, further preferably not more than 25,000 Kg/mol and still further preferably not more than 10,000 Kg/mol. Preferably the recycled polyolefin has a molecular weight distribution ($M_w/M_n$) ranging from 5 to 8, still preferably 5 to 7.

Preferably recycled polyolefin is a comingled recycled polyolefin comprising at least 80 wt.% of LLDPE, LDPE and HDPE.

In a preferred embodiment, the recycled polyolefin is predominantly derived from post-consumer recycled (PCR) polymer. Preferably at least 50 wt. %, still preferably at least 60 wt. % further preferably at least 70 wt. %, still further preferably at least 75 wt. % and most preferably at least 80 wt. % of the recycled polyolefin content is from post-consumer recycled (PCR) polymer.

Such recycled polyolefin is commercially available, e.g. from Corpela (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE) etc. A preferred recycled polyolefin is LDPE recyclate from Ecoplast.

In the recycled polyolefin preferably, the polypropylene content is in an amount ranging from 30 parts to 70 parts by weight of the recycled polyolefin and from 70 parts to 30 parts by weight of the recycled polyolefin is polyethylene content. Still preferably 40 parts to 60 parts of the polypropylene content and 60 parts to 40 parts of the polyethylene content. More preferably the recycled polyolefin (recyclates) is LDPE rich and available commercially from Ecoplast under the tradename NAV 102.

Preferably the recycled polyolefin is a recycled polyethylene having a melt flow rate at 190°C and 2.16 Kg of 0.2 to 0.8 g/10 minutes. The melt flow rate is measured using the standard method ISO 1133/99.

Preferably the recycled polyethylene has a bulk weight from 450 g/L to 500 g/L when measured using the standard method ISO 60/77.

The recycled polyolefin unit has an unsaturation on at least one terminal end. It is believed that the conditions during recycling process causes formation of unsaturation at the terminal end of the polyolefin unit due to disproportional termination mechanism as described below.

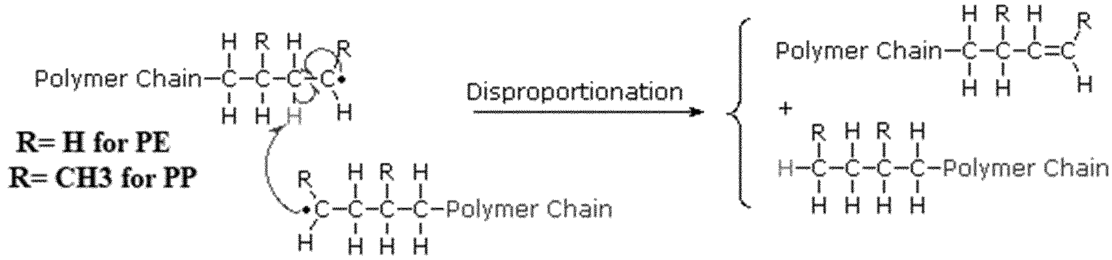

The recycled polyolefin unit has an unsaturation present on at least at one terminal end of the polyolefin. Preferably at least 60% of the recycled polyolefin unit has an unsaturation present on at least a terminal end. Still preferably at least 70%, still further preferably at least 80%, more preferably at least 85%, still more preferably at least 90%, furthermore preferably at least 95%, stull further preferably at least 97% and most preferably 100% of the recycled polyolefin unit have one unsaturation present on at least a terminal end.

More preferably the recycled polyolefin unit has unsaturation present at both terminal ends of the polyolefin unit. It is further preferred that at least 60% of the recycled polyolefin unit have an unsaturation present on both terminal end. Still preferably at least 70%, still further preferably at least 80%, more preferably at least 85%, still more preferably at least 90%, furthermore preferably at least 95%, stull further preferably at least 97% and most preferably 100% of the recycled polyolefin unit has an unsaturation present on both terminal ends.

Preferably less than 10 wt.% of the recycled polyolefin has a functional group present in the polyolefin backbone chain, still preferably less than 5 wt.% of the recycled polyolefin has a functional group present in the polyolefin backbone

chain, still more preferably less than 3 wt.%, further preferably less than 1 wt.% and most preferably the recycled polyolefin is free of functional group in the polyolefin backbone chain. Preferably the reference to functional group present in the polyolefin backbone chain, refers to the functional group grafted or crosslinked onto the polyolefin backbone. By functional group it is meant to include a group other than an alkyl group which is capable of associating with another functional group of another molecule or polymer to form a linkage. Examples of functional group include amides, amines, carboxyl, carbonyl, anhydride of carboxylic acid and hydroxyl.

Preferably less than 10 wt.% of the recycled polyolefin has an unsaturation at a position other than the terminal end of the polyolefin backbone, still preferably less than 5 wt.% of the recycled polyolefin has an unsaturation present at a position other than the terminal end in the polyolefin backbone chain, still more preferably less than 3%, further preferably less than 1% and most preferably the recycled polyolefin is free of any unsaturation at a position other than the terminal end of the recycled polyolefin backbone chain.

In the recycled resin composition obtainable according to the present invention the recycled polyolefin comprises from 5 wt.% to 90 wt.% of the composition. Preferably the amount of recycled polyolefin is at least 10 wt.%, still preferably at least 20 wt.%, still further preferably at least 35 wt.%, more preferably 40 wt.%, most preferably 50 wt.% by weight of the recycled resin composition, but preferably the amount of recycled polyolefin is not more than 85 wt.%, still preferably not more than 80 wt.%, still preferably not more than 75 wt.% and most preferably not more than 70 wt.% by weight of the recycled resin composition.

The recycled resin composition may further comprise virgin polyolefin. When present the virgin polyolefin is present in an amount from 1 wt.% to 50 wt.% of the composition, preferably 5 wt.% to 30 wt.% of the composition, still more preferably from 5 wt.% to 10 wt.% of the composition.

Functional polymer

Disclosed recycled resin composition obtainable according to the first aspect includes a functional polymer selected from anhydride grafted polyolefin, acid grafted polyolefin or combinations thereof.

Preferably the functional polymer is selected from the group consisting of maleic anhydride grafted polyolefin, acrylic acid grafted polyolefin or combinations thereof. It may be selected from maleic anhydride grafted polypropylene, acrylic acid grafted propylene or combinations thereof. Still preferably an acrylic acid grafted polyethylene, maleic anhydride grafted polyethylene or combinations thereof.

More preferably the functional polymer is an acrylic acid grafted LDPE, acrylic acid grafted LLDPE, acrylic acid grafted HPDE or combinations thereof.

Preferably the functional polymer is selected from the group consisting of maleic anhydride grafted high-density polyethylene, maleic anhydride grafted low-density polyethylene, maleic anhydride grafted linear low-density polyethylene, maleic anhydride grafted polyethylene wax, maleic anhydride grafted polypropylene, maleic anhydride grafted copolymers of propylene with other alpha olefins, for example butene, hexene, and octene, acrylic acid grafted high-density polyethylene, acrylic acid grafted low-density polyethylene, acrylic acid grafted polypropylene, acrylic acid grafted copolymers of propylene with other alpha olefins, for example butane, hexene, and octane, co-polyethylene vinyl acetate, and combinations thereof. Commercially available examples of such functional polymer include but are not limited to: Polybond (SI Group USA LLC.), Orevac and Lotader (Arkema), Licomont (Clariant), Epolene (Eastman), Integrate (Equistar), Exxelor (ExxonMobil), A-C Waxes and Optipak (Honeywell), Fusabond (E.I. DuPont de Nemours), and Bondyram (Polyram). The functional polymer can be produced by reactive extrusion processes in which the unfunctionalized polymer resin is reacted with maleic anhydride or acrylic acid and an initiator to form the functional polymer during extrusion in a twin-screw extruder at elevated temperature.

Other suitable further functional polymer which may be included in the recycled resin composition of the present invention includes but is not limited to succinyl anhydride substituted polyolefins, vinyl acetate grafted polyolefins, and the like, combinations thereof.

In addition to the traditional reactive extrusion products, the functional polymer can be a non-traditional anhydride substituted polyolefin prepared by copolymerization of a cyclic anhydride with an olefin. An example of such a non-traditional anhydride substituted polyethylene is Fusabond WPC576 (E.I. DuPont de Nemours). Functional polymer may also be prepared by reacting maleic anhydride with a polyolefin wax at elevated temperature. Examples of such functional polymer are the products manufactured by Clariant, Eastman, and Honeywell.

Functional polymer most preferably is selected from the group consisting of maleic anhydride grafted ("maleated") high-density polyethylene (Polybond 3009, Polybond 3029, Polybond 3039), maleic anhydride grafted linear low-density polyethylene (Polybond 3109), maleic anhydride grafted polypropylene (Polybond 3000, Polybond 3200), acrylic acid grafted high-density polyethylene (Polybond 1009), acrylic acid grafted polypropylene (Polybond 1001, Polybond 1002), and combinations thereof; all are available from Chemtura Corporation SN SI Group.

Further non-limitative examples of suitable functional polymer include Polybond® 1001, Polybond® 1002, Polybond® 1009, Polybond® 3000, Polybond® 3002, Polybond® 3009, Polybond® 3150, and Polybond® 3200. The Polybond®

series is commercially available from Chemtura, USA, and are polypropylenes and/or polyethylenes functionalized with maleic anhydride. Polybond® 3150 has a MFI of 50 g/10 min, 230° C., 2.16 kg; and Polybond® 3200 has a MFI of 110 g/10 min, 190° C., 2.16 kg.

The functional polymer is preferably acrylic acid grafted HDPE (Polybond 1009 from SI Group). The functional polymer has from 3 wt.% to 10 wt.%, more preferably from 3 wt.% to 8 wt.% of the acid or anhydride functional group by weight of the functional polymer. The functional polymer preferably has an acrylic acid content from 3 wt.% to 10 wt. %, still preferably from 3 wt.% to 8 wt.% and most preferably from 5.5 wt. % to 6.5 wt.% by weight of the functional polymer. Preferably the melt flow rate (MFR when measured using the ASTM D-1238 method is 5 g/10 min to 10g/10min at 190° C. and 2.16 kg.

Preferably the functional polymer has a melting point ranging from 120°C to 130°C when measured using the DSC method. The bulk density of the functional polymer is preferably from 0.5 g/cm$^3$ to 0.9 g/cm$^3$ when measured using ASTM D-1895B method.

Disclosed recycled resin composition obtainable according to the first aspect comprises from 10 wt.% to 25 wt.% functional polymer. Preferably the amount of functional polymer is from 10 wt.% to 25 wt.% of the composition, still preferably 10 wt.% to 20 wt.% of the composition. In the recycled resin composition preferably the amount of functional polymer is at least 10 wt.%, still preferably at least 12 wt.%, still further preferably at least 13 wt.%, more preferably 14 wt.%, most preferably 15 wt.% by weight of the recycled resin composition, but preferably the amount of functional polymer is not more than 24 wt.%, still preferably not more than 23 wt.%, still preferably not more than 21 wt.% and most preferably not more than 20 wt.% by weight of the recycled resin composition.

Preferably the polymer portion of the functional polymer has a weight average molecular weight from 10,000 to 30,000 Kg/mol.

In the recycled resin composition obtainable according to the first aspect of the present invention a unit of the recycled polyolefin is linked with a carboxyl group or anhydride group of the functional polymer. Further the recycled resin composition has a weight average molecular weight ranging from 10,000 Kg/mol to 50,000 Kg/mol.

Preferably the recycled resin composition has a weight average molecular weight from 15,000 Kg/mol to 40,000 Kg/mol, and most preferably from 15,000 Kg/mol to 30,000 Kg/mol. The weight average molecular weight is calculated by following the rheological characterization which does not use polydisperse glass beads. The molecular weight determination was done through the rheological melt method ASTM D4440-15 through frequency sweep and the viscosity data was then plotted in Carreau-Yasuda equation to yield molecular weight.

In the recycled resin composition, a terminal end of the recycled polyolefin unit reacts with and is linked with a carboxyl group or anhydride group of the functional polymer. Preferably at least 60% of the recycled polyolefin is linked with the carboxyl group or anhydride group of functional polymer. Still preferably at least 80 wt.% of the recycled polyolefin is linked with the carboxyl group or anhydride group of functional polymer most preferably in the recycled resin composition according to the present invention from 95 wt.% to 100 wt.% recycled polyolefin unit is linked with the carboxyl group or anhydride group of functional polymer, wherein the terminal end of the recycled polyolefin unit is linked with the carboxyl group or anhydride group of functional polymer.

Preferably in the disclosed recycled resin composition obtainable according to the first aspect the carboxyl group or anhydride group of functional polymer links two units of recycled polyolefin. That is one unit of the functional polymer is linked to the terminal end of two recycled polyolefin units.

Preferably the functional polymer has a pendant carboxyl group capable of forming chemical linkage with the unsaturation present at a terminal end of the recycled polyolefin via the terminal hydroxyl groups of the functional polymer. Preferably the chemical linkage is a covalent bond. Preferably the hydroxyl group of the functional polymer is linked with the unsaturation present at a terminal end of the recycled polyolefin, preferably the linkage is a chemical linkage, still preferably a covalent bond.

In the recycled resin composition obtainable according to the first aspect, a unit of the functional polymer links two unit of the recycled polyolefin. The functional polymer has units of acid or anhydride functional groups. The functional group on the functional polymer are of the same or different types, preferably same type. More preferably one unit of the acid or anhydride group of the functional polymer forms a covalent bond with the unsaturation present at the terminal end of one unit of the recycled polyolefin and the other unit of the same functional polymer forms a covalent bond with the unsaturation present terminal end of another unit of the recycled polyolefin.

In the recycled resin composition obtainable according to the first aspect, the weight ratio of the recycled polyolefin to the functional polymer ranges from 4:1 to 20:1.

The recycled resin composition obtainable according to the first aspect has a linking of the unsaturation at the terminal end of the recycled polyolefin which reacts with and is linked with a carboxyl group or anhydride group of the functional polymer preferably wherein the link is formed via the free radical polymerization. In the free radical polymerization, the functional radical attacks the double bond. This allows further propagation of the chain. The functional polymer attacks the terminal double bond and links one end of the recycled polyolefin with the terminal end of the other recycled polyolefin unit. The functional polymer thus forms a bridge between two recycled polyolefin units.

Preferably in recycled resin composition obtainable according to the present invention having from 10 wt.% to 25 wt.% functional polymer linked to the terminal end of a recycled polyolefin provides for an increase in the storage modulus from 122% to 135% as compared to the recycled polyolefin.

The molecular weight of the recycled resin composition also increases as compared to the recycled polyolefin. An increase in the molecular weight and a further increase in the storage modulus suggests that the increase in the molecular weight is directly associated with the formation of the link between the functional polymer and the unsaturation at the terminal end of the recycled polyolefin unit. Without wishing to be bound by theory it is believed that when the functional polymer is linked to the terminal end of the recycled polyolefin unit and preferably when the functional polymer acts as a bridge between the terminal end of two polyolefin units, preferably by forming a covalent bond, the linking causes an increase in the chain length of the recycled polyolefin. This increase in chain length causes the recycled polyolefin to configure in chain coiling to occupy the crystal lattice during solidification and imparts elasticity, accordingly an increase in storage modulus is observed.

Preferably in the disclosed recycled resin composition from 80 wt.% to 100 wt.% of the recycled polyolefin is linked with the carboxyl group or anhydride group of the functional polymer, more preferably from 85 wt.% to 100 wt.%, still more preferably from 90 wt.% to 100 wt.% and most preferably from 95 wt.% to 100 wt.% of the recycled polyolefin is linked with the carboxyl group or anhydride group of the functional polymer.

According to third aspect of the present invention disclosed is an article comprising the recycled resin composition according to the first aspect or according to the second aspect. More preferably the article includes from 50 wt.% to 100 wt.% more preferably from 50 wt.% to 99 wt.% of the recycled resin composition, according to the first aspect of the invention or according to the second aspect of the invention. Preferably the article is a film or a moulded article. In yet another embodiment the article is a packaged product wherein the package comprises from 50 wt.% to 100 wt.%, more preferably from 50 wt.% to 99 wt.% of the recycled resin composition of the first aspect or obtainable by the second aspect of the present invention.

According to a fourth aspect of the present invention disclosed film is an extruded film comprising from 50 wt.% to 100 wt.% more preferably from 50 wt.% to 99 wt.% of the recycled resin composition according to the first aspect of the invention or obtainable according to the second aspect of the invention.

The term "film" refers to a sheet-like material wherein the length and width of the material far exceed the thickness of the material. Typically, films have a thickness of about 0.5 mm or less.

Preferably the extruded film may be single layered or multi-layered. When the extruded film is multi-layered at least one layer comprising the recycled resin composition.

## Additional ingredients

The recycled resin composition may include one or more additional ingredients.

Examples of suitable additional ingredients include, but are not limited to, an antioxidant, a foaming agent, a dye, fillers, a pigment, a cross-linking agent, an inhibitor, and/or an accelerator. At least one further conventional additive may be used, such as enhancers, mold releasing agents, coating materials, humectants, plasticizers, sealing materials, thickening agents, diluting agents, binders, and/or any other commercially available or conventional components.

Antioxidants are added to prevent degradation of polymer during processing. An example is Chemtura Corporation's Naugard B25 (a mixture of tris (2,4-di-tert-butyl phenyl) phosphine arid tetrakis methylene (3,5-di-tert-butyl-4-hydroxyhydrocinnamate) methane).

Foaming agent is added to decrease density of resin composition by foaming. Examples of foaming agents include Chemtura Corporation's Celogen TSH (toluene sulfonyl hydrazide), Celogen AZ (azodicarbonamide), Celogen OT (p-p'-oxybis(benzenesulfonylhydrazide)), Celogen RA (p-toluene sulfonyl semicarbazide), Opex 80 (dinitrosopentamethylenetetramine), and Expandex 5-PT (5-phenyltetrazole).

Colorants are pigments or dyes. Dyes are commonly organic compounds that are soluble in plastic, forming a neutral molecular solution. They produce bright intense colours and are transparent. Pigments are generally insoluble in plastic. The colour results from the dispersion of fine particles (in the range of about 0.01 to about 1 Pm) throughout thermoplastic (d). They produce opacity or at least some translucence in the cellulosic-thermoplastic composite. Pigments can be organic or inorganic compounds and are viable in a variety of forms including dry powders, colour concentrates, liquids, and precolor resin pellets. Most common inorganic pigments include oxides, sulfides, chromates, and other complexes based on a heavy metal such as cadmium, zinc, titanium, lead, molybdenum, iron, combinations thereof, and others. Ultramarines are typically sulfide-silicate complexes containing sodium and aluminum. Often pigments comprise mixtures of two, three or more oxides of iron, barium, titanium, antimony, nickel, chromium, lead, and others in known ratios. Titanium dioxide is a widely used and known bright white thermally stable inorganic pigment. Other known organic pigments include azo or diazo pigments, pyrazolone pigments, permanent red 2B, nickel azo yellow, litho red, and pigment scarlet.

Cross-linking agents can optionally be added to strengthen the bond between recycled polyolefin, as described

above, into a final homogenous product. Cross-linking agent bonds across the pendent hydroxyl groups on the polyolefin chain. Cross-linking agents must have the characteristics of forming a strong bond at relatively low temperatures. Examples of cross-linking agents that can be used include polyurethanes such as isocyanate, phenolic resin, unsaturated polyester and epoxy resin and combinations thereof. Phenolic resin may be any single stage or two-stage resin, preferably with a low hexane content.

Inhibitors can be added to retard the speed of the cross-linking reaction. Examples of known inhibitors include organic acids, such as citric acid.

Accelerators can be added to increase the speed of the cross-linking reaction. Examples of accelerators include amine catalysts such as Dabco BDO (Air Products), and DEH40 (Dow Chemical).

The amounts of the various additional ingredients in the composition can be adjusted by those skilled in the art depending on the specific materials being used and the intended use of the material.

Another kind of components optionally present in the compositions of the present invention are reinforcing agents, in particular mineral fillers, like talc or calcium carbonate, or fibers, like glass fibers. The said reinforcing agents can for instance be added in amounts from 5 % to 50 % by weight with respect to the total weight of the composition.

To achieve increased levels of compatibilization among the various polymer components and with polar additives, like fillers and fibers, when present, the compositions of the present invention may comprise also compatibilizing and/or coupling agents, preferably in amounts from 0.5 to 10% by weight, more preferably from 0.5 to 5% by weight with respect to the total weight of the composition.

Examples of such compatibilizing/coupling agents are the polar-functional PP resins with oxygenated groups, like polypropylene grafted with maleic anhydride or with other compounds containing carboxylic groups, or polypropylene containing peroxide groups.

Other additives conventionally used in polyolefin compositions, like pigments, stabilizers, biocidal agents, can be present as well.

## Examples

<u>Example 1: Preparing the recycled resin composition according to the present invention</u>

For the present study, a weighed quantity of recycled polyolefin (ex. Ecoplast NAV 102-LDPE recyclate) was dried for 6 hours at 800°C before processing. 4 different examples (as provided in the table 1) of the recycled resin composition according to the present invention and 1 comparative (Ex C) was prepared by adding recycled polyolefin and the functional polymer (acrylic acid grafted PE, Polybond™ 1009) at varying ratios into an extruder. The recycled polyolefin was added along with the functional polymer (acrylic acid grafted PE) in the intermeshing co-rotating twin-screw extruder equipped with a mixing screw configuration of L/D ratio of 32:1, where "L" stands for the length and "D" stands for the diameter of the screw. The screw speed throughout the experiment was maintained at 45 rpm.

The temperature of the extruder was gradually increased from 145°C to 200°C between the hopper and the die, while the molten mass was gradually carried by the intermeshing co-rotating screw towards the die, where the heated mass was extruded into thin strands and cut into pellets and then for 6 hours at 800°C.

The prepared recycled resin composition according to the present invention in the form of pellets were collected to provide 4 different samples of the recycled resin composition.

<u>Example 2: Preparing injection moulded article from the recycled resin composition according to the present invention and evaluating the mechanical properties of the article.</u>

The pellets generated in Example 1 are then used in an injection moulding process to prepare an article. The 4 different examples of pellets of Example 1 were injected and moulded to prepare an article as per specimen type 1 in accordance with the standard ASTM 638D. During the injection moulding process, the different recycled resin composition of Example 1 was placed in the hopper of the injection moulding machine and the temperature of the extruder was increased from 81 °C to 200°C and then the heated mass was injected through a nozzle to form an injection moulded article.

The injection moulding conditions were as follows:

- Injection pressure - 60 bar
- Holding pressure - 50 bar
- Holding time - 5 seconds
- Cooling time - 30 seconds.

The injection moulded article was then used to determine the mechanical properties of the various examples of the recycled resin composition prepared in Example 1 and provided under table 1.

The properties of the injection moulded article prepared from virgin LLDPE (Ex A) and from the recycled polyolefin (Ex B) was also measured and the observations were recorded and provided in Table 1 below.

**Table 1**

| S.No | Virgin LLDPE (wt%) | Recycled polyolefin (wt%) | Acrylic acid grafted PE (wt%) | Tensile Strength (MPa) | Tensile modulus (MPa) | Elongation (%) |
|---|---|---|---|---|---|---|
| **Ex A** | 100 | 0 | 0 | 12.13 | 487.89 | >250 |
| **Ex B** | 0 | 100 | 0 | 13.95 | 393.85 | 246.78 |
| **Ex C** | 0 | 95 | 5 | 13.13 | 378.6 | 191.5 |
| **Ex 2** | 0 | 90 | 10 | 15.21 | 468.37 | 203.21 |
| **Ex 3** | 0 | 85 | 15 | 14.64 | 441.25 | 205.7 |
| **Ex 4** | 0 | 80 | 20 | 14.74 | 438.63 | 193.45 |
| **Ex 5** | 0 | 75 | 25 | 14.56 | 422.57 | 188.21 |

The results provided in table 1 shows that recycled polyolefin (Ex B) itself having high value for tensile strength but had inferior properties for tensile modulus and elongation when compared to LLDPE (Ex A, virgin polyolefin). The addition of the functional polymer (Acrylic acid grafted PE) in the recycled polyolefin (Ex 2 to Ex 5) improves the mechanical properties as compared to the recycled polyolefin (Ex B). It was further seen that when the functional polymer is within the claimed ranges (Ex 2 to Ex 5) the mechanical properties are improved significantly as compared to comparative Ex C where the functional polymer is outside the claimed range.

Example 3: Evaluating the molecular weight of the recycled resin composition prepared according to the present invention.

The molecular weight of the various samples of the resin composition having different levels of the acrylic acid grafted polyethylene was measured by computing the frequency sweep data within Carreau Yasuda equation and the results obtained were observed and provided in table 2. The frequency sweep and the molecular weight was determined using the ASTM D4440-15 method (*Standard Test Method for Plastics: Dynamic Mechanical Properties Melt Rheology).*

- Carreau-Yasuda Model

$$\frac{\eta(\dot{\gamma})-\eta_\infty}{\eta_0-\eta_\infty}=[1+(\dot{\gamma}\lambda)^a]^{\frac{n-1}{a}}$$

a - affects the shape of the transition region
$\lambda$ - time constant determines where it changes from constant to power law
n - describes the slope of the power law
$\eta_0$, $\eta_\infty$ - describe plateau viscosities

**Table 2**

| Sr. No | Example | Zero shear viscosity (Pa.s) | Weight average molecular weight (Kg/mol) |
|---|---|---|---|
| 1 | Ex B | 66900 | 10810 |
| 2 | Acrylic acid grafted PE | 56230 | 10280 |
| 3 | Ex C | 10200 | 12480 |
| 4 | Ex 2 | 235400 | 15640 |
| 5 | Ex 3 | 1000005 | 28470 |

The results on Table 2 indicates that the examples according to the present invention (Ex 2 and Ex 3) shows an increase in the molecular weight as compared to the recycled polyolefin (Ex B). An increase in the molecular weight in the examples according to the present invention (Ex 2 and Ex 3) is also accompanied with an increase in the zero shear viscosity which indicates that the increase in the molecular weight is because of the linkage formed between the functional polymer (acrylic acid grafted PE) and the terminal end saturation present in the recycled polyolefin.

Example 3: Evaluating the NMR of the recycled polyolefin.

A solid-state NMR (Philips 102023 spectrometer) was conducted to detect the position of unsaturation in the recycled polyolefin and the $^{13}C$ NMR graph was obtained as provided in Figure 1.

The $^{13}C$ NMR graph shows the presence of unsaturated functional moieties with peak at 4 and 3 position. Peak at 110 ppm and 135 ppm confirms the presence of the unsaturation at the end position of the recycled polyolefin chains. All other peak with higher length signifies the ethylene chain of polyethylene and its chain linking.

## Claims

**1.** A method of preparing a recycled resin composition, said method comprising the steps of:

i) mixing recycled polyolefin and functional polymer selected from acid grafted polyolefin, anhydride grafted polyolefin or combinations thereof to form a mixture;
ii) heating the mixture to a temperature ranging from 145°C to 200°C;
iii) applying shear pressure on the heated mixture to link the terminal end of a unit of recycled polyolefin and the functional polymer to form the recycled resin composition; and,
iv) obtaining the recycled resin composition comprising 10 wt.% to 25 wt.% functional polymer and from 5 wt.% to 90 wt.% recycled polyolefin;

wherein the recycled polyolefin unit has an unsaturation on at least one terminal end and the terminal end of the recycled polyolefin unit reacts with and is linked with a carboxyl group or anhydride group of the functional polymer and wherein the recycled resin composition has a weight average molecular weight ranging from 10,000 Kg/mol to 50,000 Kg/mol.

**2.** A method according to claim 1 wherein the recycled polyolefin has a weight average molecular weight ranging from 5000 Kg/mol to 40,000 Kg/mol.

**3.** A method according to claim 1, wherein the recycled resin composition comprises:

i) 5 wt.% to 90 wt.% recycled polyolefin;
ii) 10 wt.% to 25 wt.% functional polymer selected from anhydride-grafted polyolefin, acid-grafted polyolefin or combinations thereof;

wherein the recycled polyolefin unit has an unsaturation on at least one terminal end and the terminal end of the recycled polyolefin unit reacts with and is linked with a carboxyl group or anhydride group of the functional polymer and wherein the recycled resin composition has a weight average molecular weight from 10,000 Kg/mol to 50,000 Kg/mol.

**4.** A method according to claim 1 wherein the recycled polyolefin unit has unsaturation present at both terminal ends.

**5.** A method according to claim 1 wherein at least 60 wt.% of the recycled polyolefin unit comprises one unsaturation present at the terminal end.

**6.** A method according to any one of the preceding claims wherein one unit of the functional polymer is linked to the terminal end of two units of recycled polyolefin.

**7.** A method according to any one of the preceding claims wherein the functional polymer has a pendant carboxyl group capable of forming chemical linkage with a terminal end unsaturation of the recycled polyolefin via the terminal hydroxyl groups of the functional polymer, preferably the chemical linkage is a covalent bond.

8. A method according to any one of the preceding claims wherein at least 60%, more preferably at least 80 wt.% of the recycled polyolefin is linked with the functional polymer in the recycled resin composition.

9. A method according to any one of the preceding claims wherein the recycled polyolefin is a comingled polyolefin comprising at least 80 wt. % of LLDPE, LDPE and HDPE.

10. A method according to any one of the preceding claims wherein the functional polymer is an acrylic acid graft polyethylene, maleic anhydride grafted polyethylene or combinations thereof.

11. A method according to any one of the preceding claims wherein the functional polymer is an acrylic acid grafted LDPE, acrylic acid grafted LLDPE, acrylic acid grafted HPDE or combinations thereof.

12. A method according to any one of the preceding claims wherein the functional polymer has from 3 wt.% to 8 wt.% of the acid or anhydride functional group by weight of the functional polymer.

13. A method according to any one of the preceding claims wherein the polymer portion of the functional polymer has a weight average molecular weight from 10,000 to 30,000 Kg/mol.

14. A recycled resin composition obtainable according to any one of the preceding claims 1 to 13.

15. An article comprising the recycled resin composition according to claim 14.

16. An article according to claim 15 wherein the article is a film or moulded article comprising preferably from 50 wt. % to 100 wt. % of the recycled resin composition according to any one of the preceding claims.

**Patentansprüche**

1. Verfahren zur Herstellung einer rezyklierten Harzzusammensetzung, wobei das Verfahren die Schritte umfasst:

   i) Mischen von rezykliertem Polyolefin und funktionellem Polymer, ausgewählt aus Säure-gepfropftem Polyolefin, Anhydrid-gepfropftem Polyolefin oder Kombinationen davon, um eine Mischung zu bilden;
   ii) Erhitzen der Mischung auf eine Temperatur in dem Bereich von 145°C bis 200°C;
   iii) Ausüben von Scherdruck auf die erhitzte Mischung, um das terminale Ende einer Einheit des rezyklierten Polyolefins und das funktionelle Polymer zu verbinden, um die rezyklierte Harzzusammensetzung zu bilden; und
   iv) Erhalten der rezyklierten Harzzusammensetzung, umfassend 10 Gew.-% bis 25 Gew.-% funktionelles Polymer und 5 Gew.-% bis 90 Gew.-% rezykliertes Polyolefin;

   wobei die rezyklierte Polyolefineinheit an mindestens einem terminalen Ende eine Ungesättigtheit aufweist und das terminale Ende der rezyklierten Polyolefineinheit mit einer Carboxylgruppe oder einer Anhydridgruppe des funktionellen Polymers reagiert und verbunden wird und wobei die rezyklierte Harzzusammensetzung ein gewichtsmittleres Molekulargewicht in dem Bereich von 10.000 kg/mol bis 50.000 kg/mol aufweist.

2. Verfahren nach Anspruch 1, wobei das rezyklierte Polyolefin ein gewichtsmittleres Molekulargewicht in dem Bereich von 5.000 kg/mol bis 40.000 kg/mol aufweist.

3. Verfahren nach Anspruch 1, wobei die rezyklierte Harzzusammensetzung umfasst:

   i) 5 Gew.-% bis 90 Gew.-% rezykliertes Polyolefin;
   ii) 10 Gew.-% bis 25 Gew.-% funktionelles Polymer, ausgewählt aus Anhydrid-gepfropftem Polyolefin, Säure-gepfropftem Polyolefin oder Kombinationen davon;

   wobei die rezyklierte Polyolefineinheit an mindestens einem terminalen Ende eine Ungesättigtheit aufweist und das terminale Ende der rezyklierten Polyolefineinheit mit einer Carboxylgruppe oder einer Anhydridgruppe des funktionellen Polymers reagiert und verbunden wird und wobei die rezyklierte Harzzusammensetzung ein gewichtsmittleres Molekulargewicht in dem Bereich von 10.000 kg/mol bis 50.000 kg/mol aufweist.

4. Verfahren nach Anspruch 1, wobei die rezyklierte Polyolefineinheit eine Ungesättigtheit an beiden terminalen Enden

aufweist.

**5.** Verfahren nach Anspruch 1, wobei mindestens 60 Gew.-% der rezyklierten Polyolefineinheit eine Ungesättigtheit an dem terminalen Ende aufweist.

**6.** Verfahren nach irgendeinem der vorhergehenden Ansprüche, wobei eine Einheit des funktionellen Polymers mit dem terminalen Ende von zwei Einheiten des rezyklierten Polyolefins verbunden wird.

**7.** Verfahren nach irgendeinem der vorhergehenden Ansprüche, wobei das funktionelle Polymer eine Carboxyl-Seitengruppe aufweist, die im Stande ist, eine chemische Bindung mit einer terminalen Endungesättigtheit des rezyklierten Polyolefins über die terminalen Hydroxylgruppen des funktionellen Polymers zu bilden, wobei die chemische Bindung vorzugsweise eine kovalente Bindung darstellt.

**8.** Verfahren nach irgendeinem der vorhergehenden Ansprüche, wobei mindestens 60 Gew.-%, vorzugsweise mindestens 80 Gew.-% des rezyklierten Polyolefins mit dem funktionellen Polymer in der rezyklierten Harzzusammensetzung verbunden sind.

**9.** Verfahren nach irgendeinem der vorhergehenden Ansprüche, wobei das rezyklierte Polyolefin ein gemischtes Polyolefin ist, umfassend mindestens 80 Gew.-% LLDPE, LDPE und HDPE.

**10.** Verfahren nach irgendeinem der vorhergehenden Ansprüche, wobei das funktionelle Polymer ein Acrylsäure-gepfropftes Polyethylen, ein Maleinsäureanhydridgepfropftes Polyethylen oder Kombinationen davon ist.

**11.** Verfahren nach irgendeinem der vorhergehenden Ansprüche, wobei das funktionelle Polymer ein Acrylsäure-gepfropftes LDPE, Acrylsäure-gepfropftes LLDPE, Acrylsäure-gepfropftes HPDE oder Kombinationen davon ist.

**12.** Verfahren nach irgendeinem der vorhergehenden Ansprüche, wobei das funktionelle Polymer 3 Gew.-% bis 8 Gew.-% der Säure- oder Anhydrid-funktionellen Gruppe, bezogen auf das Gewicht des funktionellen Polymers, aufweist.

**13.** Verfahren nach irgendeinem der vorhergehenden Ansprüche, wobei der Polymeranteil des funktionellen Polymers ein gewichtsmittleres Molekulargewicht von 10.000 bis 30.000 kg/mol aufweist.

**14.** Rezyklierte Harzzusammensetzung, erhältlich nach irgendeinem der vorhergehenden Ansprüche 1 bis 13.

**15.** Artikel, umfassend die rezyklierte Harzzusammensetzung nach Anspruch 14.

**16.** Artikel nach Anspruch 15, wobei der Artikel eine Folie oder ein Formkörper ist, umfassend vorzugsweise 50 Gew.-% bis 100 Gew.-% der rezyklierten Harzzusammensetzung nach irgendeinem der vorhergehenden Ansprüche.

## Revendications

**1.** Procédé de préparation d’une composition de résine recyclée, ledit procédé comprenant les étapes suivantes :

i) mélange de polyoléfine recyclée et d’un polymère fonctionnel choisi parmi une polyoléfine greffée d’acide, une polyoléfine greffée d’anhydride et leurs combinaisons pour former un mélange ;
ii) chauffage du mélange à une température située dans la plage allant de 145°C à 200°C ;
iii) application d’une pression de cisaillement sur le mélange chauffé pour lier l’extrémité terminale d’un motif de polyoléfine recyclée et le polymère fonctionnel pour former la composition de résine recyclée ; et
iv) l’obtention de la composition de résine recyclée comprenant 10 % en poids à 25 % en poids de polymère fonctionnel et 5 % en poids à 90 % en poids de polyoléfine recyclée ;

dans lequel le motif de polyoléfine recyclée a une insaturation sur au moins une extrémité terminale et l’extrémité terminale du motif de polyoléfine recyclée réagit avec et est lié à un groupe carboxyle ou groupe anhydride du polymère fonctionnel et dans lequel la composition de résine recyclée a une masse moléculaire moyenne en masse située dans la plage allant de 10 000 kg/mol à 50 000 kg/mol.

**2.** Procédé selon la revendication 1, dans lequel la polyoléfine recyclée a une masse moléculaire moyenne en masse

située dans la plage allant de 5 000 kg/mol à 40 000 kg/mol.

**3.** Procédé selon la revendication 1, dans lequel la composition de résine recyclée comprend :

i) 5 % en poids à 90 % en poids de polyoléfine recyclée ;
ii) 10 % en poids à 25 % en poids d'un polymère fonctionnel choisi parmi une polyoléfine greffée d'anhydride, une polyoléfine greffée d'acide et leurs combinaisons ;

dans lequel le motif de polyoléfine recyclée a une insaturation sur au moins une extrémité terminale et l'extrémité terminale du motif de polyoléfine recyclée réagit avec et est lié à un groupe carboxyle ou groupe anhydride du polymère fonctionnel et dans lequel la composition de résine recyclée a une masse moléculaire moyenne en masse de 10 000 kg/mol à 50 000 kg/mol.

**4.** Procédé selon la revendication 1, dans lequel le motif de polyoléfine recyclée a une insaturation présente aux deux extrémités terminales.

**5.** Procédé selon la revendication 1, dans lequel au moins 60 % en poids du motif de polyoléfine recyclée comprennent une seule insaturation présente à l'extrémité terminale.

**6.** Procédé selon l'une quelconque des revendications précédentes, dans lequel un motif du polymère fonctionnel est lié à l'extrémité terminale de deux motifs de polyoléfine recyclée.

**7.** Procédé selon l'une quelconque des revendications précédentes, dans lequel le polymère fonctionnel a un groupe carboxyle pendant capable de former une liaison chimique avec une insaturation d'extrémité terminale de la polyoléfine recyclée via les groupes hydroxyle terminaux du polymère fonctionnel, de préférence la liaison chimique est une liaison covalente.

**8.** Procédé selon l'une quelconque des revendications précédentes, dans lequel au moins 60 %, mieux encore au moins 80 % en poids de la polyoléfine recyclée sont liés au polymère fonctionnel dans la composition de résine recyclée.

**9.** Procédé selon l'une quelconque des revendications précédentes, dans lequel la polyoléfine recyclée est une polyoléfine combinée comprenant au moins 80 % en poids de LLDPE, LDPE et HDPE.

**10.** Procédé selon l'une quelconque des revendications précédentes, dans lequel le polymère fonctionnel est un polyéthylène greffé d'acide acrylique, un polyéthylène greffé d'anhydride maléique ou leurs combinaisons.

**11.** Procédé selon l'une quelconque des revendications précédentes, dans lequel le polymère fonctionnel est un LDPE greffé d'acide acrylique, un LLDPE greffé d'acide acrylique, un HPDE greffé d'acide acrylique ou leurs combinaisons.

**12.** Procédé selon l'une quelconque des revendications précédentes, dans lequel le polymère fonctionnel a 3 % en poids à 8 % en poids du groupe fonctionnel acide ou anhydride par rapport au poids du polymère fonctionnel.

**13.** Procédé selon l'une quelconque des revendications précédentes, dans lequel la portion polymère du polymère fonctionnel a une masse moléculaire moyenne en masse de 10 000 à 30 000 kg/mol.

**14.** Composition de résine recyclée pouvant être obtenue conformément à l'une quelconque des revendications 1 à 13.

**15.** Article comprenant la composition de résine recyclée selon la revendication 14.

**16.** Article selon la revendication 15, lequel article est un film ou un article moulé comprenant de préférence 50 % en poids à 100 % en poids de la composition de résine recyclée selon l'une quelconque des revendications précédentes.

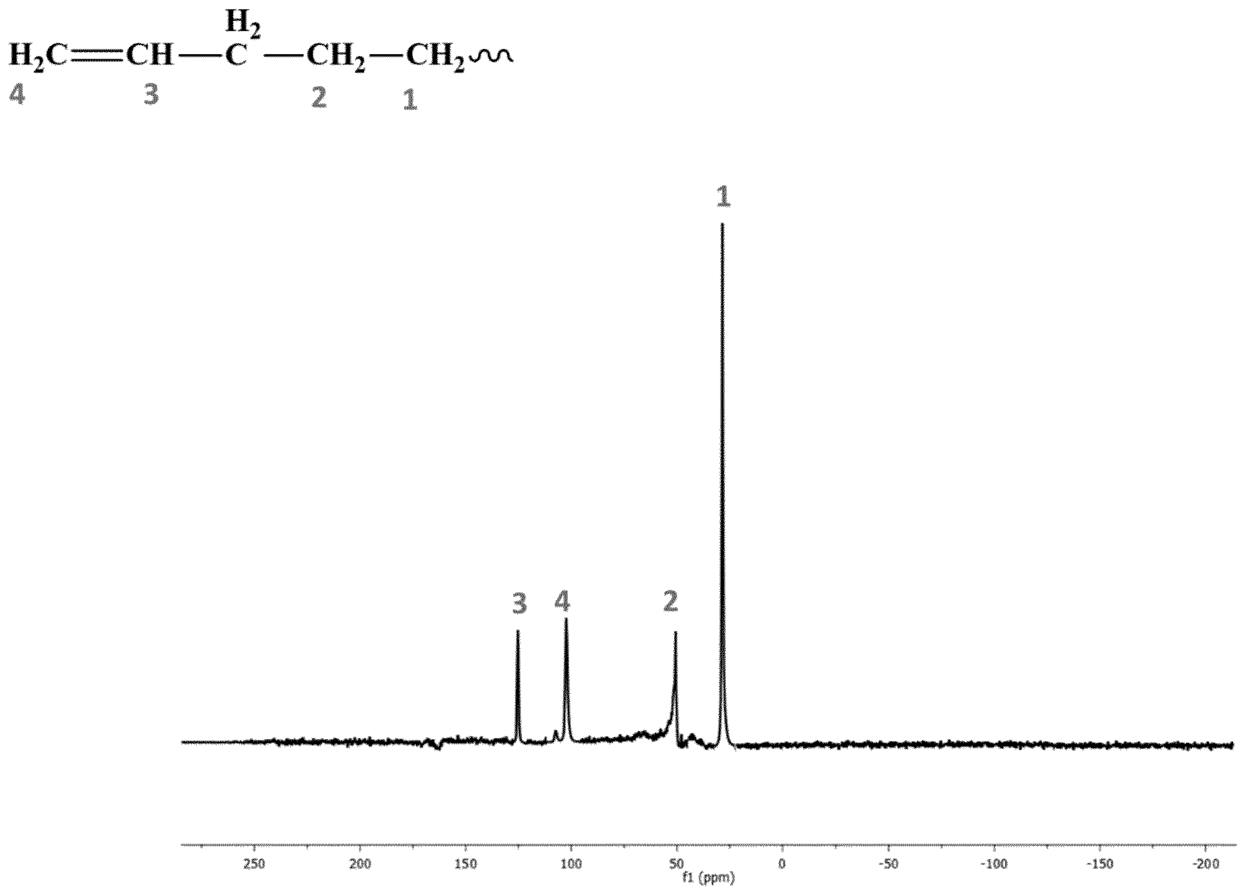


Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3862265 A, Steinkamp
- EP 0964022 A1
- WO 2007078697 A1